# EUROPEAN PATENT APPLICATION

(11) **EP 2 750 080 A2**
(43) Date of publication of application: **02.07.2014**
(21) Application number: 13199657.1
(22) Date of filing: 27.12.2013
(51) Int. Cl.: G06K 9/00, G06T 7/00, G06K 9/20, G06K 9/62, G06K 9/68

(54) **Image processing apparatus, image processing method, and computer program product**

(30) Priority: 27.12.2012 JP 2012286015
(71) Applicant: Ricoh Company, Ltd., Tokyo 143-8555 (JP)
(72) Inventor: Yoshida, Hiroyuki, Tokyo 104-6042 (JP); Yamaguchi, Yasushi, Tokyo 104-6042 (JP); Takeuchi, Tomoyoshi, Tokyo 104-6042 (JP)
(74) Representative: Schwabe - Sandmair - Marx

(57) **Abstract**

The invention is concerning to an image processing apparatus that includes an acquisition unit (10), a first setting unit (30), a second setting unit (20), and a detection unit (40). The acquisition unit (10) acquires image data. The first setting unit (30) sets an area included in the image data as a template area. The second setting unit (20) sets a search area indicating an area to be subjected to a detection process for detecting an area similar to the template area from the image data. The detection unit (40) performs the detection process for detecting, out of the search area, whether or not there is an area similar to the template area in an area other than an area corresponding to each of the template area and an area that has been detected by the detection process.

## Description

### CROSS-REFERENCE TO RELATED APPLICATIONS

The present application claims priority to and incorporates by reference the entire contents of Japanese Patent Application No. 2012-286015 filed in Japan on December 27, 2012.

### BACKGROUND OF THE INVENTION

### 1. Field of the Invention

The present invention relates to an image processing apparatus, an image processing method, and a computer program product.

### 2. Description of the Related Art

Conventionally, for example, as disclosed in Japanese Laid-open Patent Publication No. 2012-177961, there has been a technique of designating a template image to detect a similar image area in which the image similar to the template image is located within the same image.

However, when the parameter and/or the template for detecting the similar image area is changed to perform the similar-image area detections for multiple times in order to detect all of a number of the similar image areas located within the same image, for example, the same area is likely to be extracted in a slightly different shape or undesired areas are likely to be extracted. That is, conventionally, there has been a problem that the similar image areas within the same image cannot be detected in high accuracy.

In view of the above-mentioned conventional technique, there is needed to provide an image processing apparatus, an image processing method, and a computer program product that is able to detect the similar image areas within the same image in high accuracy.

### SUMMARY OF THE INVENTION

It is an object of the present invention to at least partially solve the problems in the conventional technology.

According to the present invention, there is provided: an image processing apparatus comprising: an acquisition unit configured to acquire image data; a first setting unit configured to set an area included in the image data as a template area; a second setting unit configured to set a search area indicating an area to be subjected to a detection process for detecting an area similar to the template area from the image data; and a detection unit configured to perform the detection process for detecting, out of the search area, whether or not there is an area similar to the template area in an area other than an area corresponding to each of the template area and an area that has been detected by the detection process.

The present invention also provides an image processing method comprising: an acquisition step for acquiring image data; a first setting step for setting an area included in the image data as a template area; a second setting step for setting a search area indicating an area to be subjected to a detection process for detecting an area similar to the template area from the image data; and a detection step for performing the detection process for detecting, out of the search area, whether or not there is an area similar to the template area in an area other than an area corresponding to each of the template area and an area that has been detected by the detection process.

The present invention also provides a computer program product comprising a non-transitory computer-readable recording medium having a computer program that causes a computer to function as: an acquisition unit configured to acquire image data; a first setting unit configured to set an area included in the image data as a template area; a second setting unit configured to set a search area indicating an area to be subjected to a detection process for detecting an area similar to the template area from the image data; and a detection unit configured to perform the detection process for detecting, out of the search area, whether or not there is an area similar to the template area in an area other than an area corresponding to each of the template area and an area that has been detected by the detection process.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram illustrating a configuration example of an image forming system according to an embodiment of the present invention;
FIG. 2 is a diagram illustrating a functional configuration example of an image processing apparatus;
FIG. 3 is a diagram illustrating an example of a search area list;
FIG. 4 is a diagram illustrating an example of a template area list;
FIG. 5 is a diagram illustrating an example of a valid detection area;
FIG. 6 is a diagram illustrating a data structure example of a storage unit;
FIG. 7 is a schematic diagram for illustrating a generation process of a detection target image;
FIG. 8 is a flowchart illustrating an operation example of the image processing apparatus; and
FIG. 9 is a flowchart illustrating an example of a registration determination process.

### DETAILED DESCRIPTION OF THE PREFERRED EMBODIMENTS

With reference to the attached drawings, described below in detail will be the embodiment of an image processing apparatus, an image processing method, and a computer program product according to the present invention.

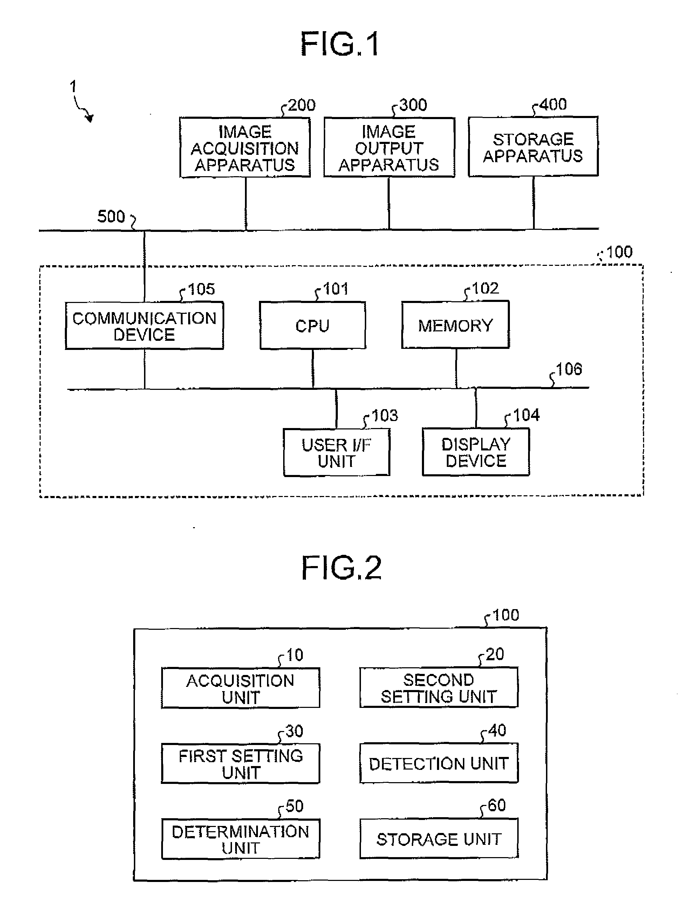

FIG. 1 is a diagram illustrating a configuration example of an image forming system 1 according to the present embodiment. As illustrated in FIG. 1, the image forming system 1 includes an image processing apparatus 100, an image acquisition apparatus 200, an image output apparatus 300, and a storage apparatus 400. In this example, a PC (Personal Computer) that is a general processing system is used as the image processing apparatus 100, which is connected to the image acquisition apparatus 200 such as a scanner and the like, the image output apparatus 300 such as a printer and the like, and the storage apparatus 400 such as an NAS and the like via a network 500 to configure the image forming system 1.

The image processing apparatus 100 includes a CPU 101, a memory 102, a user I/F unit 103, a display device 104, and a communication device 105, which are connected to each other via an internal bus 106. The CPU 101 controls the entire operation of the image processing apparatus 100 in an integral manner. The memory 102 stores various data therein such as a program and the like executed by the CPU 101. The user I/F unit 103 is a device for input operation and, for example, includes a keyboard, a mouse, and the like. The display device 104 is a device adapted to display various information and, for example, may be configured with a liquid crystal display device and the like. The communication device 105 is a device for communicating with external devices.

FIG. 2 is a block diagram illustrating a functional configuration example of the image processing apparatus 100. The image processing apparatus 100 has a function of extracting text data received via the communication device 105 and determining an area providing a surface effect by a clear toner that is a transparent (colorless) toner (an area providing the characteristics) out of the image data obtained after the extraction. It is noted that the term, transparent (colorless), refers to that the transmittance is greater than or equal to 70%, for example, and the type of the surface effect includes, for example, one relating to the presence/absence of gloss, a surface protection, a watermark with information embedded, a texture, and the like.

As illustrated in FIG. 2, the image processing apparatus 100 includes an acquisition unit 10, a second setting unit 20, a first setting unit 30, a detection unit 40, a determination unit 50, and a storage unit 60. Although, in the present embodiment, each function of the acquisition unit 10, the second setting unit 20, the first setting unit 30, the detection unit 40, and the determination unit 50 is implemented when the CPU 101 executes the program stored in the memory 102, it is not limited to the above and, for example, at least a part of the acquisition unit 10, the second setting unit 20, the first setting unit 30, the detection unit 40, and the determination unit 50 may be implemented with a dedicated hardware circuit. Further, the storage unit 60 may be implemented in the above-described memory 102, for example, or may be implemented in an external storage device and the like.

The acquisition unit 10 has the function of acquiring a PDF of text data that is a manuscript for which the characteristics designation is made and extracting this text data as the image to display it on the screen of the display device 104. In other point of view, it can be understood that the acquisition unit 10 has the function of acquiring the image data that is to be subjected to the characteristics designation.

The second setting unit 20 sets a search area that indicates the area to be subjected to a detection process by which the area similar to the template area is detected from the image data (the image data being to be subjected to the characteristics designation). In the present embodiment, viewing the displayed image data, the user designates, an area intended to be subjected to the detection process by using the mouse that is the user I/F unit 103. Then, the second setting unit 20 sets the area designated by the user as a search area out of the image data and registers the set search area in the storage unit 60. That is, the second setting unit 20 has the function of setting the search area indicating the area to be subjected to the detection process out of the image data according to the user input.

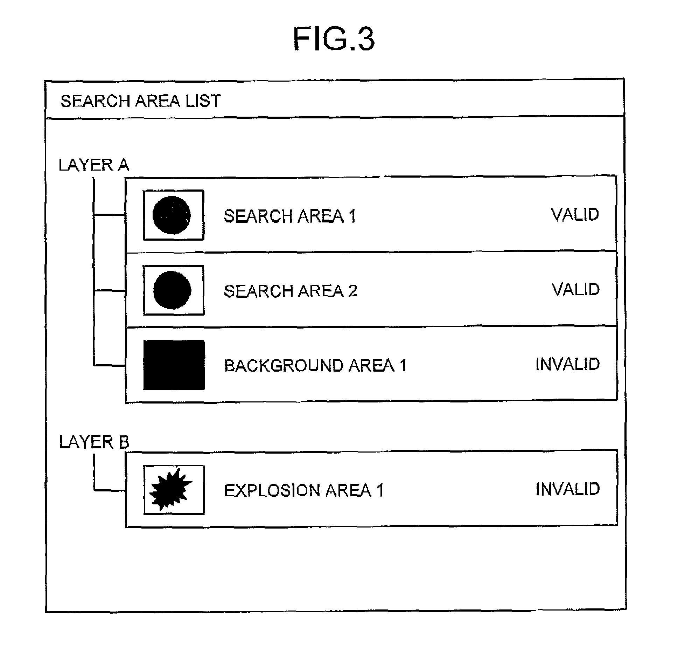

FIG. 3 is a diagram illustrating an example of the registered search area list. When the area which is not required to be searched is included in a valid area (an area to be subjected to the detection process), the area may be area-designated by the mouse and registered as an invalid area. When the valid area and the invalid area overlap, the area which has been lastly designated is used. Since the present system has a layer structure, the uppermost area in the layers is used. When the areas are on the same layer, the area registered in the latter order is prioritized. Specifically, when an added invalid area is layered over a part of the valid area, that part will be the invalid area. When it takes much time if one large image is subjected to the detection process, multiple areas (search areas) may be registered to the list so as to minimize the search range, so that the process time can be reduced. The second setting unit 20 has the functions of registering the valid area to be searched, registering the invalid area, changing the position on the layer, deleting the area, making the valid area invalid and vise versa, and registering new area according to the designation by the user. Further, the registered area can be moved to the template area list and/or the valid area list described later.

Turning back to FIG. 2, description will continue. The first setting unit 30 sets the area included in the image data (the image data to be subjected to the characteristics designation) as a template area. More specifically, the first setting unit 30 registers, in the storage unit 60, a predetermined area included in the image data as the template area according to the input from the user and associates, with the template area to be registered, the registration information indicating whether or not to register the area detected by the detection process as a new template area and registers it in the storage unit 60. In this example, while the registration information represents the number of re-search times indicating the number of times for which the area detected by the detection process is registered in the storage unit 60 as the template area, it is not limited to the above.

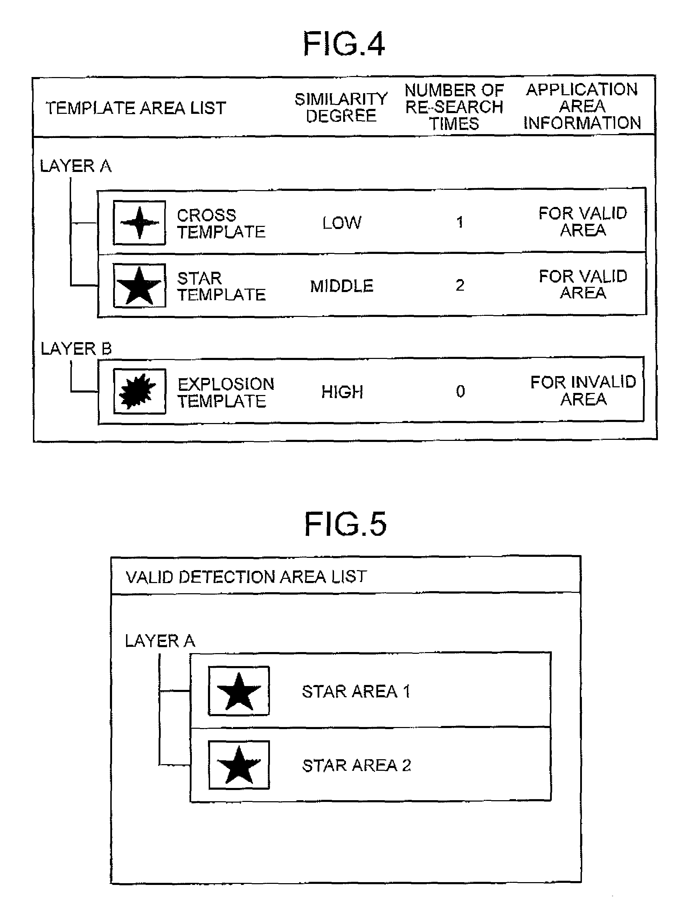

In the present embodiment, viewing the displayed image data, the user designates the area intended to be the template area by using the mouse that is the user I/F unit 103. Then, the first setting unit 30 sets the area designated by the user out of the image data as the template area and registers the set template area in the storage unit 60. FIG. 4 is a diagram illustrating an example of the registered template area list. Since the detection process for detecting the area similar to the template area out of the image data is made assuming that the area added to the template area list is the template area, it is preferable to register, as the template area, the area which is intended to be detected and whose shape is not similar to the area that has already been registered, but it is not limited to the above, and the detected area and/or the area which is similar to the area that has already been registered may be registered as the template area. When there are multiple areas that are likely to be falsely detected, in order to remove all of them by utilizing the detection process, they may be registered as the template area for the invalid area.

Further, for each template area registered in the template area list (to be utilized in the detection process) according to the user input, the first setting unit 30 sets the similarity degree that is a parameter to be utilized in detecting the area similar to the template area. With respect to the value of the parameter representing the similarity degree, it can be set such that a smaller value represents much similarity, while a larger value represents less similarity. The threshold for the value of the parameter can be predefined depending on the similarity degree, for example, the threshold may be set to A when the similarity degree is "high", the threshold may be set to B (> A) when the similarity degree is "middle", and the threshold may be set to C (> B) when the similarity degree is "low". When searching the area that is likely to be falsely detected, the similarity degree may be set to high so as not to falsely detect the area intended to be extracted.

Further, for each template area registered in the template area list, the first setting unit 30 sets the number of re-search times according to the user input. For example, when the number of re-search times associated to a particular template area is zero, this indicates that the area detected by the detection process in which the template area is used is not added to the template area list. Further, for example, when the number of re-search times associated to the template area is one, this indicates that the area detected by the detection process in which the template area is used is registered to the template area list (the first time) and the area detected by the detection process in which the registered area is used is not registered. Further, for example, when the number of re-search times associated to the template area is two, this indicates that the area detected by the detection process in which the template area is used is registered (the first time) and the area detected by the detection process in which the area registered at the first time is also registered (the second time), while the area detected by the detection process in which the area registered at the second time is not registered.

Further, for each template area registered in the template area list, the first setting unit 30 may also set application area information that indicates whether the template area is the template area for the valid area (the area to be subjected to the detection process) or the template area for the invalid area (the area not to be subjected to the detection process) according to the user input.

The first setting unit 30 has the functions of, according to the designation by the user, registering the designated area as the template area for the valid area, registering it as the template area for the invalid area, changing the position on the layer, deleting the area, switching between for the valid area / for the invalid area, changing the similarity degree, changing the number of research times, and registering the area detected by the detection process as a new template area. Further, the registered area may be moved to the search area list and/or the valid area list described later.

Turning back to FIG. 2, description will continue. The detection unit 40 performs the detection process for detecting whether or not there is an area similar to the template area in an area other than an area corresponding to each of the template area and an area that has been detected by the detection process out of the search area set by the second setting unit 20. In the present embodiment, the detection unit 40 performs the detection process using the template area for each of one or more template areas registered in the storage unit 60. The detection unit 40 then registers the area detected by the detection process in the storage unit 60 as the valid detection area. FIG. 5 is a diagram illustrating an example of the registered valid detection area list. When unnecessary area is included in the valid detection area, it can be deleted or moved to the search area list as the invalid search area according to the designation by the user and it can be moved to the template area list. In order to make a better contour, a dedicated contour extraction process may be applied.

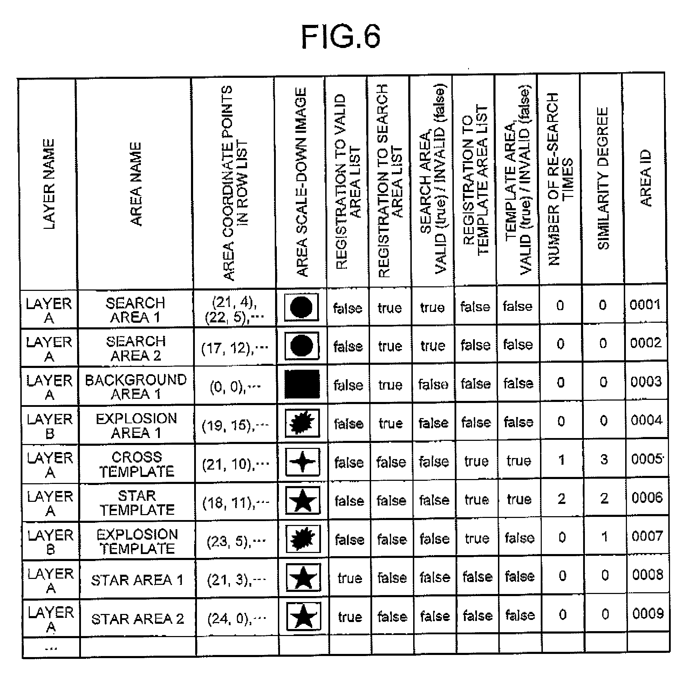

For example, the developed image data and the above-described search area list, the template area list, and the valid detection area list may be displayed on the screen, and the process by each of the second setting unit 20, the first setting unit 30, and the detection unit 40 may be performed in parallel. Since the structures of respective lists are similar, they are managed together in one list (see FIG. 6). For easy understanding, it may be divided into respective lists by the area ID as a key. In the example of FIG. 6, when the value corresponding to the similarity degree is "1", this indicates that the similarity degree is "high" (the threshold corresponding to the similarity degree "high" is set), when the value corresponding to the similarity degree is "0" or "2", this indicates that the similarity degree is "middle" (the threshold corresponding to the similarity degree "middle" is set), and when the value corresponding to the similarity degree is "3", this indicates that the similarity degree is "low" (the threshold corresponding to the similarity degree "low" is set).

Further, when the area similar to the template area has already been detected once or more and when the excessive areas have been detected, deletion of the unnecessary area from the valid detection area list allows the areas to be set without excess and deficiency, and thus the process may be terminated at this time depending on the user judgment.

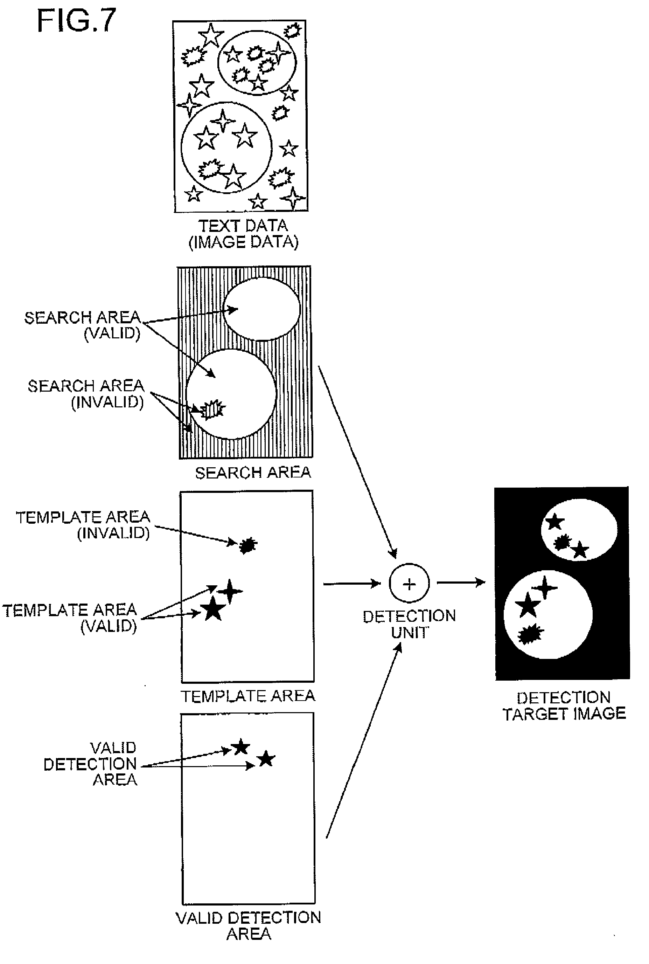

Further, in the present embodiment, the detection unit 40 uses the image data developed from the acquired text data, the search area list, the template area list, and the valid area detection list to generate the image in which the search-unnecessary area is masked from the image data (the image to be subjected to the detection process, hereafter, referred to as detection target image). First, the valid area of the search area list is set to white pixels, the invalid area is set to black pixels, and the white / black are overwritten on the image in the registration order. When there are layers, the overwriting is similarly made from a lower layer in the registration order. Next, all the areas in the template area list are overwritten by the black pixels as the invalid area. Next, all the areas in the valid area detection list are overwritten by the black pixels as the invalid area (see FIG. 7). This prevents the already-detected areas from being detected again.

For each of one or more template areas included in the template area list, the detection unit 40 uses the template area, the similarity degree associated with the template area, and the detection target image to perform the detection process for detecting whether or not there is an area similar to the template area in the detection target image, and performs the contour extraction process for all the detected areas.

Here, after the detection process by the detection unit 40 ends, the above-described first setting unit 30 determines whether or not to register the area detected by the detection process in the storage unit 60 as a new template area according to the registration information associated to the template area used in the detection process.

More specifically, after the detection process by the detection unit 40 ends, when the number of re-search times associated with the template area used in the detection process is one or more, the first setting unit 30 registers the area detected by the detection process in the storage unit 60 as the new template area, subtracts one from the number of re-search times associated with the template area used in the detection process, and associates it with the new template area to register it in the storage unit 60. On the other hand, when the number of re-search times associated with the template area used in the detection process is zero, the area detected by the detection process is not registered in the storage unit 60.

Further, in the present embodiment, after the detection process ends, the first setting unit 30 deletes the template area used in the detection process and the number of re-search times associated with that template area from the storage unit 60. More detailed description will be provided later.

Turning back to FIG. 2, description will continue. The determination unit 50 determines that the area detected by the detection unit 40 is the area that provides the surface effect designated by the user. That is, the determination unit 50 determines the area detected by the detection unit 40 as the area that provides characteristics (characteristics designation area).

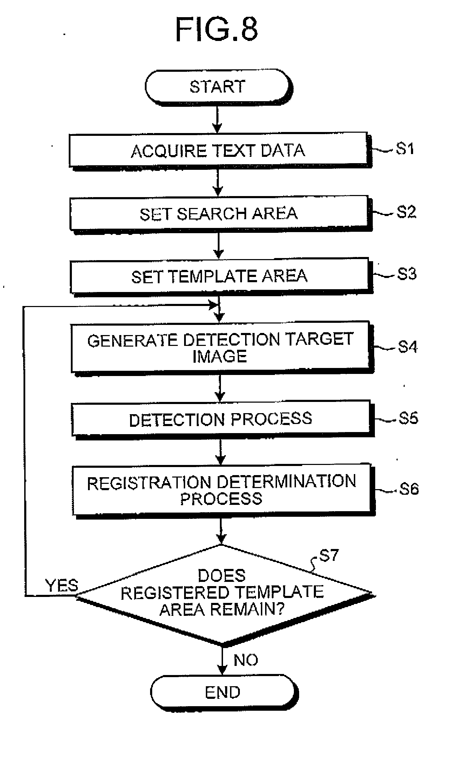

Next, described will be the operation example of the image processing apparatus 100 according to the present embodiment. FIG. 8 is a flowchart illustrating the operation example of the image processing apparatus 100. As illustrated in FIG. 8, the acquisition unit 10 .first acquires the text data (step S1). The acquisition unit 10 extracts the acquired text data and displays the extracted acquired image data on the screen. Next, in response to the user.input, the second setting unit 20 sets, from the image data, the search area that is to be subjected to the detection process (step S2). The second setting unit 20 registers the set search area in the storage unit 60 and generates the search area list. Next, the first setting unit 30 sets the template area in response to the user input (step S3). More specifically, in response to the user input, the first setting unit 30 sets the template area, the similarity degree, the number of re-search times, and the application area information, associates them with each other to register them in the storage unit 60, and generates the template area list. It is noted that, in this example, it is assumed that the valid area detection list is not yet created.

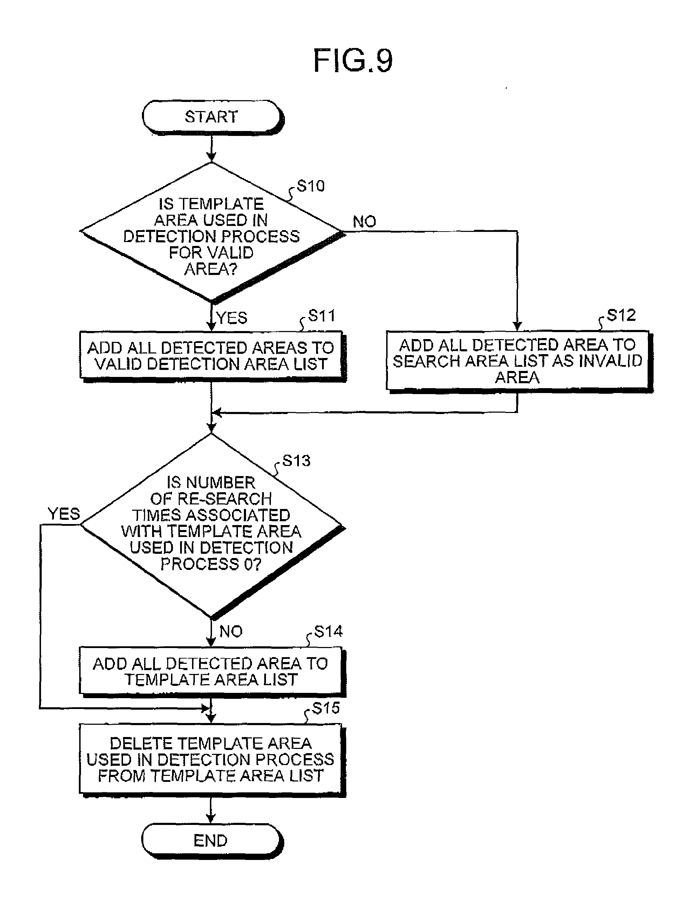

Next, the detection unit 40 uses the image data developed from the text data acquired at step S1, the search area list, and the template area list to generate the detection target image in which the search-unnecessary area of the image data is masked (step S4). Next, the detection unit 40 selects any template area from one or more template areas included in the template area list and performs the detection process (step S5). Next, the detection unit 40 performs a registration determination process for determining whether or not to register the area detected by the detection process at step S5 in the storage unit 60 as a new template area (step S6). By referring to FIG. 9, described below will be the specific content of the registration determination process.

FIG. 9 is a flowchart illustrating an example of the registration determination process. As illustrated in FIG. 9, the detection unit 40 first refers to the application area information associated with the template area used in the detection process of step S5, and determines whether or not the template area is for the valid area (step S10). When the template area is determined to be for the valid area (YES at step S10), the detection unit 40 adds all the areas detected by the detection process of step S5 to the valid detection area list (step S11). On the other hand, when the template area is determined to be for the invalid area (NO at step S10), all the area detected by the detection process of step S5 are added to the search area list as the invalid area (step S12).

Next, the detection unit 40 determines whether the number of re-search times associated with the template area used in the detection process of step S5 is zero or not (step S13). When the number of re-search times associated with that template area is not determined to be zero, that is, it is one or more (NO at step S13), the detection unit 40 adds all the areas detected by the detection process of step S5 to the template area list as a new template area (step S14). In this example, the detection unit 40 subtracts one from the number of re-search times associated with the template area used in the detection process of step S5 and associates it with each of all the areas detected by the detection process to register it in the storage unit 60. Further, the detection unit 40 associates, with each of all the areas detected by the detection process, the same information as the similarity degree associated with the template area used in the detection process of step S5 and the application information and registers it in the storage unit 60. The process then enters step S15.

On the other hand, when the number of re-search times associated with the template area used in the detection process of step S5 is determined to be zero in step S13 described above (YES at step S13), the process enters step S15.

In step S15, the detection unit 40 deletes the template area used in the detection process in step S5 from the template area list (step S15). More specifically, the detection unit 40 deletes the template area used in the detection process of step S5, the similarity degree associated with that template area, the number of re-search times, and the application area information from the template area list. The description above is the specific content of the registration determination process of step S6 in FIG. 8.

Turning back to FIG. 8 again, description will continue. After the above-described registration determination process of step S6, the detection unit 40 determines whether or not the template area registered in the storage unit 60 remains (step S7). When it is determined that the registered template area remains (YES at step S7), the process on and after step S4 is repeated. On the other hand, when it is not determined that the registered template area remains (NO at step S7), the process ends. The area detected as described (the area within the valid detection area list) is determined to be the area that provides the surface effect designated by the user (the characteristics designation area).

As described above, in the present embodiment, performed is the detection process for detecting whether or not there is an area similar to the template area in the area other than the area corresponding to each of the pre-registered template area and the valid detection area (the area that has been detected by the detection process) (that is, in the above-described detection target image) out of the search area in the image data extracted from the acquired text data, so that the overlapping detection of the same area or the detection of the undesired area can be prevented. Therefore, the present embodiment allows for the advantage of the highly accurate detection of the similar image area within the same image.

In particular, in recent years, the image forming technique with the use of the clear toner has been paid attention in order to make the image quality in the electronic photograph technique close to the offset printing to provide a new additional value and expand the market of the digital printing system. For example, in order to place the clear toner on the similar image area having many water droplets, considered may be the technique for designating the template image to detect the similar image area. However, in a mere combination of the technique of designating the clear toner area at the image forming and the technique of detecting the similar image area using the template, when detection processes are performed for multiple times by changing the parameter and/or the template used for detecting the similar image area in order to select all of a number of the expected similar image areas, the same area is likely to be detected in slightly different shape or undesired areas are likely to be extracted. It then requires to manually perform all the designation as to whether or not to use them and/or the management of the detected areas, which results in the problem that it takes labor.

In contrast, the above-described present embodiment allows all the expected similar image areas to be detected from the same image without overlapping, which facilitates a series of operations for designating the area that provides the surface area by the clear toner. That is, the present embodiment is particularly effective in the characteristics designation such as the clear toner.

It is noted that it may be configured to record and provide the program executed by the CPU 101 of the above-described embodiment in the computer readable recording medium such as a CD-ROM, a flexible disk (FD), a CD-R, a DVD (Digital Versatile Disk), and so on in an installable form file or an executable form file.

Furthermore, it may be configured to store the program executed by the CPU 101 of the above-described embodiment in the computer connected to the network such as the Internet and have it downloaded via the network. Further, it may be configured to provide or deliver the control program executed by the CPU 101 of the above-described embodiment via the network such as the Internet.

The present invention allows for a highly accurate detection of the similar image areas within the same image.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image processing apparatus comprising:
an acquisition unit (10) configured to acquire image data;
a first setting unit (30) configured to set an area included in the image data as a template area;
a second setting unit (20) configured to set a search area indicating an area to be subjected to a detection process for detecting an area similar to the template area from the image data; and
a detection unit (40) configured to perform the detection process for detecting, out of the search area, whether or not there is an area similar to the template area in an area other than an area corresponding to each of the template area and an area that has been detected by the detection process.

2. The image processing apparatus according to claim 1 further comprising a storage unit (60) configured to register therein the template area, wherein
the detection unit (40) performs the detection process in which the template area is used for each of one or more of the template areas registered in the storage unit (60), and
the first setting unit (30) registers a predetermined area included in the image data into the storage unit (60) as the template area according to a user input, and associates, with the template area to be registered, registration information indicating whether or not to register the area detected by the detection process into the storage unit (60) as a new one of the template area, and registers the area detected by the detection process into the storage unit (60).

3. The image processing apparatus according to claim 2, wherein,
after the detection process ends, the first setting unit (30) determines whether or not to register the area detected by the detection process into the storage unit (60) as a new one of the template area in accordance with the registration information associated with the template area used in the detection process.

4. The image processing apparatus according to claim 3, wherein
the registration information represents a number of re-search times indicating a number of times of registering the area detected by the detection process into the storage unit (60) as the template area, and
after the detection process ends, when the number of re-search times associated with the template area used in the detection process is one or more, the first setting unit (30) registers the area detected by the detection process into the storage unit (60) as a new one of the template area, subtracts one from the number of re-search times associated with the template area used in the detection process, and associates it with a new one of the template area to register it into the storage unit (60).

5. The image processing apparatus according to claim 3, wherein,
after the detection process ends, when the number of re-search times associated with the template area used in the detection process is zero, the first setting unit (30) does not register the area detected by the detection process into the storage unit (60).

6. The image processing apparatus according to claim 4 or 5, wherein,
after the detection process ends, the first setting unit (30) deletes the template area used in the detection process and the number of re-search times associated with the template area from the storage unit (60).

7. An image processing method comprising:
an acquisition step for acquiring image data;
a first setting step for setting an area included in the image data as a template area;
a second setting step for setting a search area indicating an area to be subjected to a detection process for detecting an area similar to the template area from the image data; and
a detection step for performing the detection process for detecting, out of the search area, whether or not there is an area similar to the template area in an area other than an area corresponding to each of the template area and an area that has been detected by the detection process.

8. A computer program product comprising a non-transitory computer-readable recording medium having a computer program that causes a computer to function as:
an acquisition unit (10) configured to acquire image data;
a first setting unit (30) configured to set an area included in the image data as a template area;
a second setting unit (20) configured to set a search area indicating an area to be subjected to a detection process for detecting an area similar to the template area from the image data; and
a detection unit (40) configured to perform the detection process for detecting, out of the search area, whether or not there is an area similar to the template area in an area other than an area corresponding to each of the template area and an area that has been detected by the detection process.
